# EUROPEAN PATENT APPLICATION

(11) **EP 4 686 186 A1**
(43) Date of publication of application: **28.01.2026**
(21) Application number: 25152763.6
(22) Date of filing: 20.01.2025
(51) Int. Cl.: H04N 1/00, H04N 1/203, H04N 1/32, H04N 1/387, H04N 1/193

(54) **IMAGE PROCESSING APPARATUS, PROGRAM, AND METHOD FOR DETERMINING WHETHER A PATTERN IS DISPATCHED ON THE TWO SIDES OF A RECORDED SHEET**

(30) Priority: 24.07.2024 JP 2024118949
(71) Applicant: FUJIFILM Business Innovation Corp., Minato-ku Tokyo (JP)
(72) Inventor: HAYASHI, Terutake, Yokohama-shi (JP); HASHIMOTO, Takayuki, Yokohama-shi (JP); TAKAZAWA, Daiki, Yokohama-shi (JP)
(74) Representative: Haseltine Lake Kempner LLP

(57) **Abstract**

An image processing apparatus includes a processor configured to: read a first surface of a recorded sheet to generate pieces of first data; read a second surface of the recorded sheet to generate pieces of second data; combine the generated pieces of first data with the respective generated pieces of second data; and check whether a specific pattern is present, the specific pattern being a pattern which is possibly included in the pieces of combined data.

## Description

### Background

### (i) Technical Field

The present disclosure relates to an image processing apparatus, a program, and a method.

### (ii) Related Art

For example, Japanese Unexamined Patent Application Publication No. 2008-125029 describes an image processing apparatus that demagnifies, for storage in a storage unit, document front-surface data and document rear-surface data, which have been read by using charge coupled devices (CCDs), in the sub-scanning direction by using a demagnifying unit, and performs determination on the stored data by using a determination unit. Thus, the image processing apparatus determines whether at least any of the front surface and the rear surface of the read document is a specific document.

### Summary

Accordingly, it is an object of the present disclosure to provide an image processing apparatus, a program, and a method. Compared with the case in which a specific pattern, which may be included on any of the surfaces of a recorded sheet, is checked for sequentially in pieces of first data and pieces of second data obtained from the recorded sheet, the image processing apparatus, the program, and the method achieve a reduction of the amount of use of memory storing pieces of first data or pieces of second data which wait for the checking.

According to a first aspect of the present disclosure, there is provided an image processing apparatus comprising a processor configured to: read a first surface of a recorded sheet to generate pieces of first data; read a second surface of the recorded sheet to generate pieces of second data; combine the generated pieces of first data with the respective generated pieces of second data; and check whether a specific pattern is present, the specific pattern being a pattern which is possibly included in the pieces of combined data.

According to a second aspect of the present disclosure, in the image processing apparatus according to the first aspect, the processor is configured to: for each piece of combined data, during checking of the piece of combined data, start generating a next piece of first data and a next piece of second data which are used in a next piece of combined data that is to be checked after the piece of combined data.

According to a third aspect of the present disclosure, in the image processing apparatus according to the first aspect, the processor is configured to: during reading of the first surface and the second surface of the recorded sheet, start checking each piece of combined data.

According to a fourth aspect of the present disclosure, in the image processing apparatus according to any one of the first to third aspects, the processor is configured to: for each piece of combined data, during checking of the piece of combined data, generate a next piece of combined data that is to be checked next after the piece of combined data.

According to a fifth aspect of the present disclosure, in the image processing apparatus according to the fourth aspect, the processor is configured to: in response to completion of checking the piece of combined data, start checking the next piece of combined data, and then generate an after-next piece of combined data for after-next checking.

According to a sixth aspect of the present disclosure, in the image processing apparatus according to any one of the first to fifth aspects, the processor is configured to: for each piece of combined data, when it is detected that the piece of combined data contains the specific pattern, determine which data, the corresponding piece of first data or the corresponding piece of second data, included in the piece of combined data contains the specific pattern.

According to a seventh aspect of the present disclosure, in the image processing apparatus according to the sixth aspect, the processor is configured to: specify a position of the specific pattern on a basis of an elapsed time in the checking of the piece of combined data, the elapsed time being a time till when it is determined that the specific pattern is present.

According to an eighth aspect of the present disclosure, in the image processing apparatus according to any one of the first to seventh aspects, the processor is configured to: for each pair of first data and second data, demagnify the piece of first data and the piece of second data; and generate a corresponding piece of combined data on a basis of the demagnified piece of first data and the demagnified piece of second data.

According to a ninth aspect of the present disclosure, there is provided a program causing a computer to execute a process comprising: reading a first surface of a recorded sheet to generate pieces of first data; reading a second surface of the recorded sheet to generate pieces of second data; combining the generated pieces of first data with the respective generated pieces of second data; and checking whether a specific pattern is present, the specific pattern being a pattern which is possibly included in the pieces of combined data.

According to a tenth aspect of the present disclosure, there is provided a method comprising: reading a first surface of a recorded sheet to generate pieces of first data; reading a second surface of the recorded sheet to generate pieces of second data; combining the generated pieces of first data with the respective generated pieces of second data; and checking whether a specific pattern is present, the specific pattern being a pattern which is possibly included in the pieces of combined data.

According to the image processing apparatus of the first aspect, compared with the case in which a specific pattern, which may be included on any of the surfaces of a recorded sheet, is checked for sequentially in the pieces of first data and the pieces of second data, the amount of memory use may be reduced.

According to the image processing apparatus of the second aspect, compared with the case of waiting to check a piece of combined data until completion of, for the entire recorded sheet, generating the pieces of first data or generating the pieces of second data, the time required to check, for the entire recorded sheet, whether a specific pattern is present is shortened.

According to the image processing apparatus of the third aspect, compared with the case of waiting to check the pieces of combined data until completion of reading the entire recorded sheet, the time required to check, for the entire recorded sheet, whether a specific pattern is present is shortened.

According to the image processing apparatus of the fourth aspect, compared with the case of waiting to generate a next piece of combined data until completion of a piece of combined data, the time required to check, for the entire recorded sheet, whether a specific pattern is present is shortened.

According to the image processing apparatus of the fifth aspect, compared with the case in which an operation of generating an after-next piece of combined data is started before start of checking of a next piece of combined data, the time required to check, for the entire recorded sheet, whether a specific pattern is present is further shortened.

According to the image processing apparatus of the sixth aspect, it may be detected which surface of a recorded sheet contains a specific pattern.

According to the image processing apparatus of the seventh aspect, compared with the case in which only which data, a piece of first data or a piece of second data, contains a specific pattern is specified, a process corresponding to the specific pattern may be performed at the position of the specific pattern disposed on a recorded sheet.

According to the image processing apparatus of the eighth aspect, compared with the case in which it is detected whether a specific pattern is present by using a piece of combined data generated without demagnifying the corresponding piece of first data and the corresponding piece of second data, the time required to check whether a specific pattern is present is shortened.

According to the program of the ninth aspect, compared with the case in which a specific pattern, which may be included on any of the surfaces of a recorded sheet, is checked for sequentially in the piece of first data and the pieces of second data, the amount of memory use may be reduced.

According to the method of the tenth aspect, compared with the case in which a specific pattern, which may be included on any of the surfaces of a recorded sheet, is checked for sequentially in the piece of first data and the pieces of second data, the amount of memory use may be reduced.

### Brief Description of the Drawings

Exemplary embodiment of the present disclosure will be described in detail based on the following figures, wherein:
Fig. 1 is a schematic perspective view of an exemplary configuration of an image forming apparatus according to an exemplary embodiment of the present disclosure;
Fig. 2 is a schematic cross-sectional view of an exemplary configuration of an image reading section;
Fig. 3 is a block diagram illustrating an exemplary partial configuration of an image forming apparatus;
Fig. 4 is a diagram for describing how an image forming apparatus of the present disclosure reads image data and processes the image data, and is a diagram illustrating a flow of processing image data after reading front-surface and rear-surface images on a recorded sheet;
Fig. 5 is a diagram illustrating exemplary front-surface and rear-surface images of a recorded sheet according to the present exemplary embodiment;
Fig. 6 is a diagram illustrating front-surface band data and rear-surface band data which are generated by a front-surface image reading unit and a rear-surface image reading unit reading the front surface and the rear surface, respectively, of a recorded sheet;
Fig. 7 is a diagram illustrating combined band data generated by a combining processor combining front-surface band data with rear-surface band data;
Fig. 8 is a timing chart illustrating the temporal relationship from when the front-surface image and the rear-surface image of a recorded sheet are read, till the front-surface image and the rear-surface image are checked, according to the present exemplary embodiment;
Fig. 9 is a temporally-enlarged timing chart of Fig. 8 about processing performed by a front-surface image reading unit, a rear-surface image reading unit, a combining processor, and an image checking unit;
Fig. 10 is a diagram illustrating how to determine the position of a specific pattern when an image checking unit detects the specific pattern, according to the present exemplary embodiment; and
Fig. 11 is a diagram for describing images duplicated on a recording sheet when it is detected that a recorded sheet contains a specific pattern.

### Detailed Description

### Image Forming Apparatus

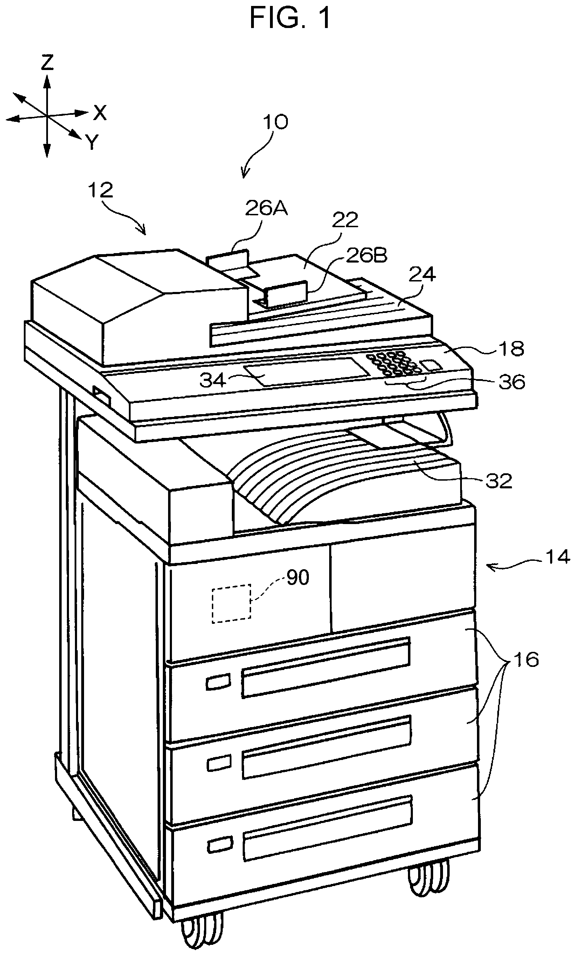

An image forming apparatus according to the present exemplary embodiment will be described. The width direction of an image forming apparatus 10 illustrated in Fig. 1 is represented by the X direction indicated by arrow X; the height direction is represented by the Z direction indicated by arrow Z; the depth direction is represented by the Y direction indicated by arrow Y.

### The Schematic Configuration of the Image Forming Apparatus

Fig. 1 is a schematic perspective view of an exemplary configuration of an image forming apparatus according to the present exemplary embodiment. As illustrated in Fig. 1, an image forming apparatus 10, which is an exemplary image processing apparatus of the present disclosure, includes an image reading section 12, an image forming section 14, a sheet feeding section 16, and an operation panel 18. As illustrated in Fig. 1, the image forming apparatus 10 includes a controller 90 inside its housing.

The image reading section 12 includes a document stand 22, on which a recorded sheet is placed, and a document discharge unit 24, from which a recorded sheet whose image has been read is discharged. The image reading section 12 includes a transport mechanism which transports a recorded sheet placed on the document stand 22. The image reading section 12 includes an image reading sensor, which optically reads an image of a recorded sheet or the like, and a scanning mechanism for scanning a recorded sheet.

The image reading section 12 according to the present exemplary embodiment is configured as a "double-sided reading device" which reads the front-surface image and the rear-surface image of a recorded sheet in a single cycle. The configuration in appearance will be described here, and specific configurations of the image reading section 12, such as the transport mechanism, the image reading sensor, and the scanning mechanism, will be described below. The front surface of a recorded sheet is an exemplary "first surface" in the present exemplary embodiment. The rear surface of a recorded sheet is an exemplary "second surface" in the present exemplary embodiment.

On the top surface of the document stand 22, a pair of guides 26A and 26B, which guide a recorded sheet when the recorded sheet placed on the document stand 22 is to be transported, are disposed. The pair of guides 26A and 26B are configured so that at least one of them is moved in the Y direction which is the width direction of a recorded sheet placed on the document stand 22. The pair of guides 26A and 26B are moved in accordance with the width of a recorded sheet placed on the document stand 22.

The image forming section 14 includes an image forming mechanism for forming an image on a sheet fed from the sheet feeding section 16, and a discharge mechanism for discharging, to a sheet discharge unit 32, a sheet on which an image has been formed. The image forming mechanism includes an image forming unit, which forms an image, for example, by using an electrophotographic system, and a fixing device. The image forming unit includes a photoreceptor drum, a charging device, an exposure device, a developing device, a transfer device, and a cleaning device. Through the configuration, the image forming section 14 forms an image on a sheet fed from the sheet feeding section 16, and discharges, to the sheet discharge unit 32, the sheet on which the image has been formed.

The sheet feeding section 16 includes a sheet housing unit, which holds sheets, and a feed mechanism, which feeds sheets from the sheet housing unit to the image forming section 14. The feed mechanism includes a taking-out roller, which takes out a sheet from the sheet housing unit, and transport rollers. Multiple sheet housing units may be included in accordance with the types and sizes of sheets. Through the configuration, the sheet feeding section 16 feeds sheets to the image forming section 14.

The operation panel 18 includes a touch panel 34 for displaying various screens such as a setting screen, and various types of buttons 36, such as a start button and a ten-digit keypad. Through the configuration, the operation panel 18 receives user operations, and functions as a user interface (UI) displaying various types of information to users.

### The Configuration of the Image Reading Section

The configuration of the image reading section 12 will be described.

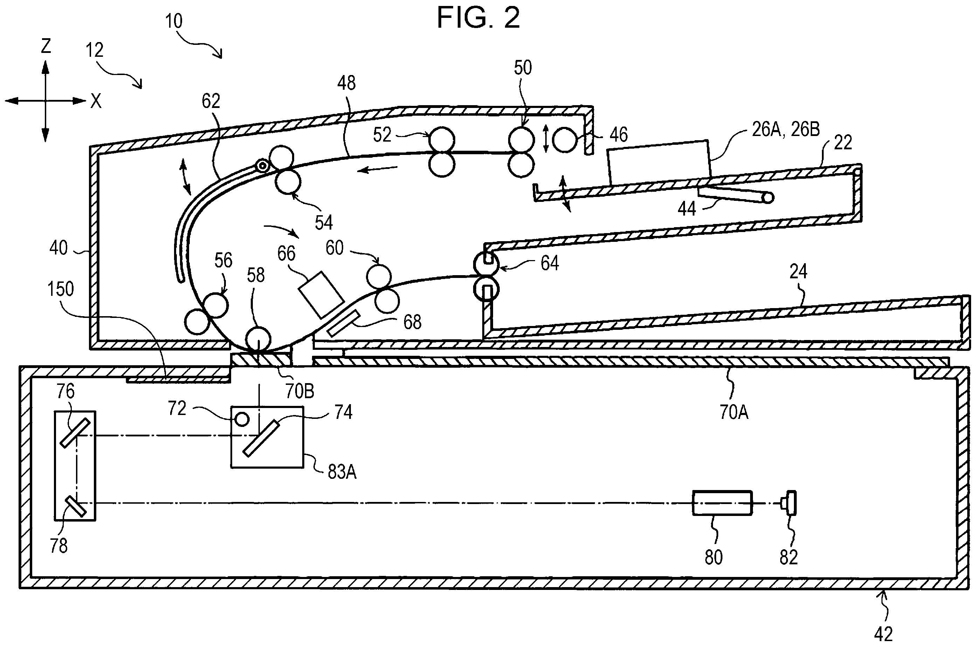

Fig. 2 is a schematic cross-sectional view of an exemplary configuration of the image reading section 12 illustrated in Fig. 1. As described above, the image reading section 12 is configured as a "double-sided reading device".

The image reading section 12 includes a document transport unit 40, which transports a document placed on the document stand 22, a front-surface image reading unit 42, which reads the front-surface image of a recorded sheet, and a rear-surface image reading unit 66, which reads the rear-surface image of a recorded sheet. The rear-surface image reading unit 66 is disposed inside the document transport unit 40. The rear-surface image reading unit 66 is disposed downstream of the front-surface image reading unit 42 in the recorded-sheet transport direction in which a recorded sheet is transported.

The document transport unit 40 includes a raising/lowering mechanism 44, which raises and lowers the document stand 22, and a taking-in roller 46, which takes in, one by one, recorded sheets in a state in which the taking-in roller 46 is in contact with the topmost surface of a stack of recorded sheets placed on the document stand 22 raised by the raising/lowering mechanism 44. The document transport unit 40 includes feed rollers 50, which feed, to a transport path 48, a recorded sheet taken in by the taking-in roller 46, and various transport rollers 52, 54, 56, 58, and 60, which further transport the recorded sheet along the transport path 48 to the downstream side in the transport direction. The rotation shaft of each roller extends in the Y direction orthogonal to the recorded-sheet transport direction.

The front-surface image reading unit 42, which is an exemplary reading unit, includes transparent first platen glass 70A, transparent second platen glass 70B, and a first light source 72 which radiates illumination light toward a recorded sheet. The front-surface image reading unit 42 includes reflecting mirrors 74, 76, and 78 which bend the light path of reflected light obtained through reflection from a recorded sheet, a lens 80, which forms a focused image by reflected light obtained through reflection from the reflecting mirror 78, and a first image-reading sensor 82 which is disposed at the imaging position of the lens 80. "Transparent" means allowing each of the illumination light and the reflected light to be transmitted.

In the present exemplary embodiment, the first image-reading sensor 82, which is an exemplary light-receiving unit, is a charge coupled device (CCD) line sensor in which multiple CCDs are arranged in the Y direction orthogonal to the recorded-sheet transport direction. That is, the first image-reading sensor 82 is a light-receiving demagnifying-optical-system unit.

A first white reference plate 150 is disposed on the left side, in the X direction, of the "reading position of a front-surface image" in Fig. 2. The first white reference plate 150 has a uniform reflectivity in the Y direction which is the main scanning direction. The first white reference plate 150 is used to obtain image information which is optically read by the first image-reading sensor 82 and which is used for image processing, such as shading correction and edge enhancement processing using a spatial filter.

The rear-surface image reading unit 66, which is an exemplary reading unit, is disposed between the transport roller 58 and the transport rollers 60 of the document transport unit 40. In the present exemplary embodiment, a second image-reading sensor (not illustrated) of the rear-surface image reading unit 66 is a contact image sensor (CIS) which reads the image of a recorded sheet in contact with the sensor. Therefore, the rear-surface image reading unit 66 is disposed so as to be opposite the rear surface of a recorded sheet transported along the transport path 48. That is, the rear-surface image of a recorded sheet is read at the position where the rear-surface image reading unit 66 is disposed. Hereinafter, this position is referred to as the "reading position of a rear-surface image".

The rear-surface image reading unit 66 includes a second light source (not illustrated) which radiates illumination light toward the rear surface of a recorded sheet transported by the document transport unit 40 or a second white reference plate 68. The rear-surface image reading unit 66 includes a lens (not illustrated) which forms a focused image by reflected light obtained through reflection from the rear surface of a recorded sheet or the second white reference plate 68, and the second image-reading sensor (not illustrated) disposed at the imaging position of the lens. Each of the second light source, the lens, and the second image-reading sensor is fixed at a predetermined position in the housing of the image reading section 12, and is housed in the housing.

The second white reference plate 68 is disposed at the opposite position of the rear-surface image reading unit 66 with the transport path 48 interposed in between. The second white reference plate 68 has a uniform reflectivity in the Y direction which is the main scanning direction SD. The second white reference plate 68 is used to obtain image information which is optically read by the second image-reading sensor and which is used for image processing, such as shading correction and edge enhancement processing using a spatial filter.

### Hardware Configuration

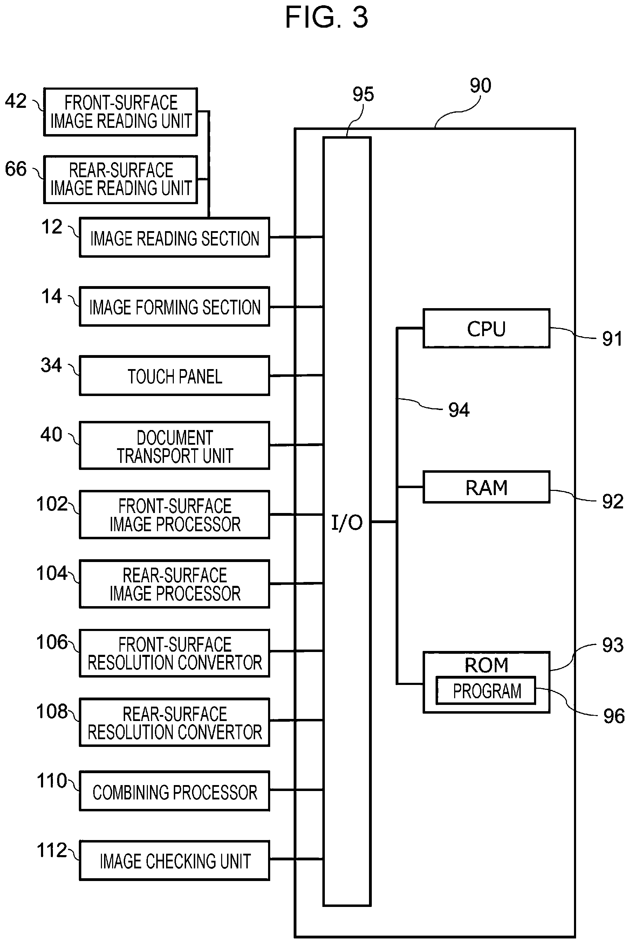

The electrical configuration of the image forming apparatus 10 will be described below by referring to Fig. 3. As illustrated in Fig. 3, the image forming apparatus 10 according to the present exemplary embodiment has an electrical configuration in which the components are connected to the controller 90. More specifically, the controller 90 is connected to the image reading section 12, the image forming section 14, the touch panel 34, and the document transport unit 40. The controller 90 is further connected to a front-surface image processor 102, a rear-surface image processor 104, a front-surface resolution convertor 106, a rear-surface resolution convertor 108, a combining processor 110, and an image checking unit 112. The controller 90 is connected to the front-surface image reading unit 42 and the rear-surface image reading unit 66 through the image reading section 12.

As illustrated in Fig. 3, the controller 90 has a central processing unit (CPU) 91, a random-access memory (RAM) 92, a read-only memory (ROM) 93, and an input/output interface (I/O) 95. These components are connected to each other through a control bus 94.

The CPU 91, which is a central processing unit, executes various programs including a program 96, and controls the other components. The CPU 91 is an exemplary "processor" in the present exemplary embodiment. The RAM 92 temporarily stores the program 96 or data as a work area, for example, for processors including the CPU 91. The RAM 92 is a component called so-called "memory". The ROM 93 stores various types of data including the program 96 which is an exemplary "program" according to the present disclosure.

The CPU 91 of the controller 90 controls the components, which are illustrated in Fig. 3, on the basis of the program 96. Thus, the components perform their operations described below.

### The Operation of the Image Reading Section

The operation of the image reading section 12 will be described below. The image reading section 12, which is controlled by the controller 90, performs a double-sided reading operation described below. The controller 90 controls each of the first light source 72 and the reflecting mirrors 74, 76, and 78 so that a carriage 83A containing the first light source 72 and the reflecting mirror 74 is positioned just below the "reading position of a front-surface FS image".

As illustrated in Fig. 2, when a recorded sheet is placed with its front surface FS up on the document stand 22, the raising/lowering mechanism 44 raises the document stand 22. When the document stand 22 is raised to a predetermined position and stops, the taking-in roller 46 comes in contact with the topmost surface of a stack of recorded sheets placed on the document stand 22, and takes in the recorded sheets one by one. A recorded sheet, which has reached the feed rollers 50, is fed to the transport path 48 by the feed rollers 50, and transport of the recorded sheet starts. The recorded sheet, which has reached the transport rollers 52, is transported by the transport rollers 52 to the downstream side in the transport direction.

The recorded sheet, which has reached the transport rollers 54, is transported by the transport rollers 54 to the downstream side in the transport direction. The leading end of the recorded sheet, which has been transported, is brought into contact with the stopped transport rollers 56, and the recorded sheet is in a loop state in which the recorded sheet bends along the transport path 48. When the recorded sheet is in the loop state, a guide mechanism 62 rotates so as to open outward about its pivot, and guides the recorded sheet while the loop state of the recorded sheet remains. The transport rollers 56, which have stopped, start rotating in response to start of reading an image.

The recorded sheet, which has reached the transport rollers 56, is aligned by the transport rollers 56, and is transported to the downstream side in the transport direction. The transport rollers 56 feed the recorded sheet to the front-surface image reading position where the transport roller 58 is disposed. The front surface FS of the recorded sheet is opposite the second platen glass 70B at the front-surface FS image reading position. The recorded sheet, which has reached the transport roller 58, is transported to the downstream side in the transport direction in the state in which the recorded sheet is pressed against the second platen glass 70B by the transport roller 58. The front-surface image reading unit 42 reads the front-surface FS image of the recorded sheet, which is being transported, through the second platen glass 70B. More specifically, illumination light emitted from the first light source 72 is radiated to the front surface FS of the recorded sheet, which is being transported. Reflected light obtained through reflection from the front surface FS of the recorded sheet forms a focused image on the first image-reading sensor 82. Thus, the image of the front surface FS of the recorded sheet is read as image data.

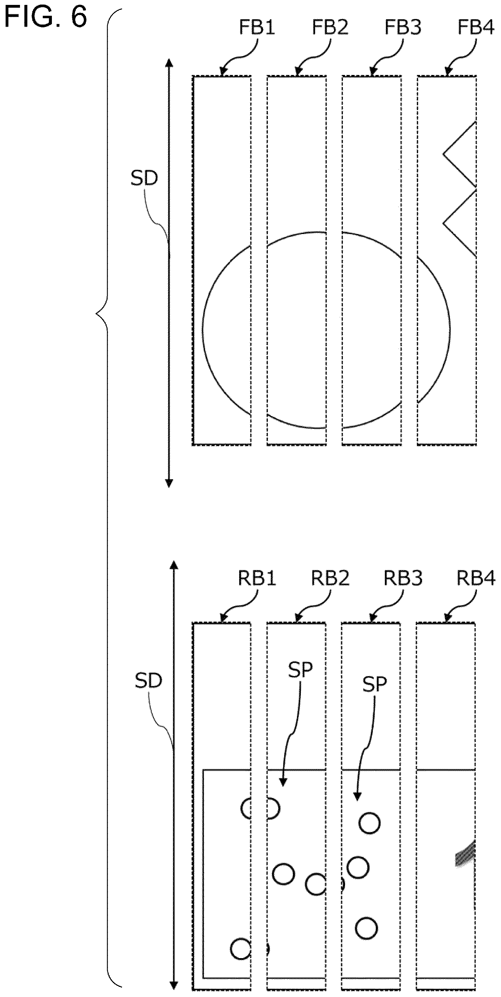

The first image-reading sensor 82 reads the image of the front surface FS of the recorded sheet in the main scanning direction SD. More specifically, as illustrated in Fig. 6 described below, the image of the front surface FS is read in the main scanning direction SD (in Fig. 2, the arrow indicating the Y direction) which is orthogonal to the recorded-sheet transport direction. Therefore, the image data, which is read by the front-surface image reading unit 42, is obtained as images extending in the main scanning direction SD. The image data, which is read by the front-surface image reading unit 42, is temporarily stored in the RAM 92 as front-surface band data FB as described below.

The recorded sheet, whose front-surface FS image has been read, is transported to the downstream side in the transport direction, and is fed to the rear-surface image reading position where the rear-surface image reading unit 66 is disposed. The rear surface RS of the recorded sheet is opposite the rear-surface image reading unit 66 at the rear-surface RS image reading position. The rear-surface image reading unit 66 reads the rear-surface RS image of the recorded sheet, which is being transported. The recorded sheet, whose rear-surface RS image has been read, is transported to the downstream side in the transport direction by the transport rollers 60. The recorded sheet, which has reached discharge rollers 64, is discharged to the document discharge unit 24 by the discharge rollers 64. More specifically, illumination light emitted from the second light source is radiated to the rear surface RS of the recorded sheet, which is being transported. Reflected light obtained through reflection from the rear surface RS of the recorded sheet forms a focused image in the rear-surface image reading unit 66. Thus, the image of the rear surface RS of the recorded sheet is read as image data.

The rear-surface image reading unit 66 reads the image of the rear surface RS of the recorded sheet in the main scanning direction SD. More specifically, as illustrated in Fig. 6 described below, the image of the rear surface RS is read in the main scanning direction SD (in Fig. 2, the arrow indicating the Y direction) which is orthogonal to the recorded-sheet transport direction. Therefore, the image data, which has read by the rear-surface image reading unit 66, is obtained as images extending in the main scanning direction SD. The image data, which has read by the rear-surface image reading unit 66, is temporarily stored in the RAM 92 as rear-surface band data RB as described below.

When a recorded sheet is placed on the top surface of the first platen glass 70A, the image of a single side of the recorded sheet is read by the front-surface image reading unit 42 as described below.

While the first light source 72 and the reflecting mirrors 74, 76, and 78 are being moved to the right in the Y direction, illumination light emitted from the first light source 72 is radiated to the recorded sheet. That is, a single side of the recorded sheet is scanned by the illumination light. The illumination light passes through the first platen glass 70A, is radiated to the recorded sheet, and is reflected by the recorded sheet. The reflected light passes through the first platen glass 70A, has its light path bent by the reflecting mirrors 74, 76, and 78, and enters the lens 80. The light, which has entered the lens 80, causes the lens 80 to form a focused image on the first image-reading sensor 82. Thus, the image of the single side of the recorded sheet is read.

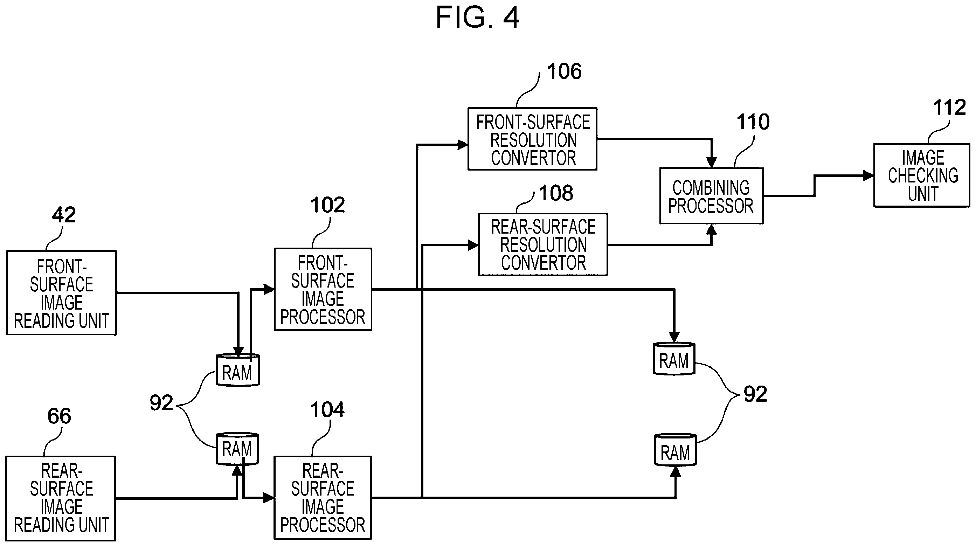

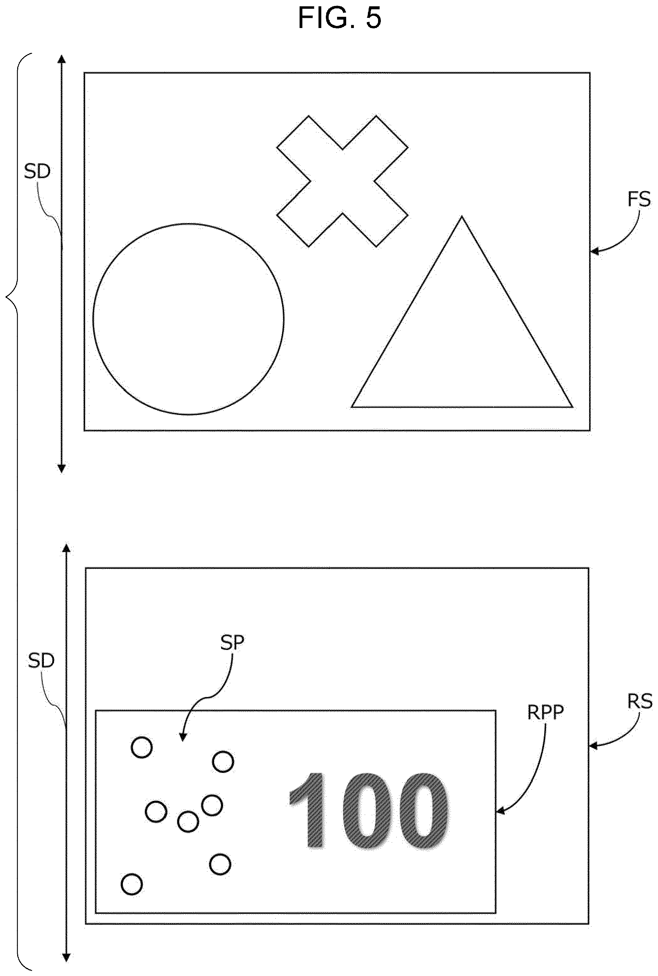

How to duplicate and print the images of the double sides of a recorded sheet by using the image forming apparatus 10 according to the present exemplary embodiment will be described. In other words, how to read the images of a recorded sheet will be described by referring to Figs. 4 to 7. Fig. 4 is a diagram illustrating a flow of processing image data obtained after the front-surface FS image and the rear-surface RS image of a recorded sheet are read, in the present exemplary embodiment. Fig. 5 is a diagram illustrating exemplary images of the front surface FS and the rear surface RS of a document in the present exemplary embodiment.

### Data Flow

As illustrated in Fig. 4, image data, which has been read by the front-surface image reading unit 42, is temporarily stored in the RAM 92. Similarly, as illustrated in Fig. 4, image data, which has been read by the rear-surface image reading unit 66, is temporarily stored in the RAM 92.

The front-surface FS image of the recorded sheet in Fig. 5 is stored in the RAM 92 as front-surface band data FB 1, FB2, FB3, etc., which extend in the main scanning direction SD as illustrated in Fig. 6. As illustrated in Fig. 6, the front-surface band data FB 1, FB2, FB3, etc., which are sequentially read by the front-surface image reading unit 42 while the recorded sheet is being transported, are stored in the RAM 92 as multiple pieces of front-surface band data FB. The end of the reference characters of each piece of the front-surface band data FB1, FB2, FB3, etc. is data indicating the corresponding image positioned in the front surface FS of the recorded sheet. Hereinafter, a simple expression, "front-surface band data FB", refers to each one or any one of these pieces of front-surface band data FB without specifying which one. The front-surface band data FB is exemplary "first data" in the present exemplary embodiment.

As illustrated in Figs. 5 and 6, like the front surface FS, the image of the rear surface RS of a recorded sheet is read as multiple pieces of rear-surface band data RB1, RB2, RB3, etc. A simple expression, "rear-surface band data RB", refers to each one or any one of these pieces of rear-surface band data RB without specifying which one. The rear-surface band data RB is exemplary "second data" in the present exemplary embodiment.

As illustrated in Fig. 4, front-surface band data FB recorded in the RAM 92 is read by the front-surface image processor 102, and is subjected to filtering processing such as noise rejection. The front-surface band data FB, which has been processed by the front-surface image processor 102, is transmitted to the front-surface resolution convertor 106, and is also stored in the RAM 92.

The front-surface resolution convertor 106 converts the resolution of the front-surface band data FB which has been received from the front-surface image processor 102. More specifically, the front-surface resolution convertor 106 decreases the resolution of the front-surface band data FB to reduce the number of pieces of data contained in the front-surface band data FB. Any method may be used as the method of decreasing the resolution. For example, the pieces of data, which are recorded in the pixels in front-surface band data FB, are thinned out at predetermined intervals to decrease the resolution.

The front-surface band data FB, having a resolution decreased by the front-surface resolution convertor 106, is transmitted to the combining processor 110.

The rear-surface image processor 104 has substantially the same configuration as that of the front-surface image processor 102. The rear-surface resolution convertor 108 has substantially the same configuration as that of the front-surface resolution convertor 106. That is, in the present exemplary embodiment, rear-surface band data RB is processed in substantially the same manner as that of front-surface band data FB. The rear-surface band data RB, which has been processed by the rear-surface image processor 104, is transmitted to the rear-surface resolution convertor 108, and is also stored in the RAM 92. The rear-surface band data RB, having a resolution decreased by the rear-surface resolution convertor 108, is transmitted to the combining processor 110.

In the present exemplary embodiment, the front-surface image processor 102 and the rear-surface image processor 104 have substantially the same configuration. However, they are separate components. That is, the front-surface image processor 102 and the rear-surface image processor 104 are capable of processing front-surface band data FB and rear-surface band data RB, respectively, at the same time. In other words, the image forming apparatus 10 in the present exemplary embodiment includes two image processors. The front-surface resolution convertor 106 and the rear-surface resolution convertor 108 are capable of processing front-surface band data FB and rear-surface band data RB, respectively, at the same time.

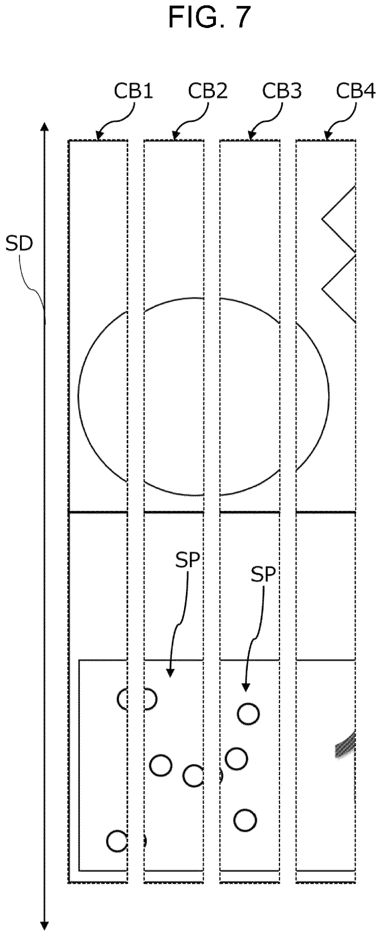

As illustrated in Fig. 7, the combining processor 110 combines front-surface band data FB with rear-surface band data RB. Any method may be used as a combining processing method. For example, as illustrated in Fig. 7, front-surface band data FB is combined with rear-surface band data RB so that the resulting data extends in the main scanning direction SD.

As illustrated in Fig. 7, multiple pieces of front-surface band data FB are combined with the respective pieces of rear-surface band data RB. Thus, multiple pieces of combined band data CB1, CB2, CB3, etc. are generated sequentially. A simple expression, "combined band data CB", refers to each one or any one of these pieces of combined band data CB without specifying which one. The combined band data CB is exemplary "combined data" in the present exemplary embodiment.

As illustrated in Fig. 7, each piece of front-surface band data FB and the corresponding piece of rear-surface band data RB, which are to be combined with each other, are pieces of data which extend in the main scanning direction SD and which have the same position. In other words, combined band data CB is generated by combining front-surface band data FB with rear-surface band data RB which have the same position (in Fig. 5, the distance from the end of the short side) in the sub-scanning direction in a recorded sheet. More specifically, the combined band data CB1 is generated by combining the front-surface band data FB1 with the rear-surface band data RB 1. The combined band data CB2 is generated by combining the front-surface band data FB2 with the rear-surface band data RB2. The same is true form each subsequent piece of combined band data CB.

As illustrated in Fig. 4, combined band data CB, which has been generated by the combining processor 110, is transmitted to the image checking unit 112.

The image checking unit 112 checks whether a specific pattern SP is present in the input image data. For example, as illustrated in the rear surface RS in Fig. 5, when there is a duplication-prohibited pattern RPP, the image checking unit 112 detects a specific pattern SP included in the duplication-prohibited pattern RPP. The specific pattern SP detected by the image checking unit 112 may be any. An example of the specific pattern SP is a pattern which is called EURion constellation and which is used to prohibit duplication of a bill.

In the present exemplary embodiment, the image checking unit 112 sequentially checks combined band data CB which has been received from the combining processor 110, and checks whether a specific pattern SP is present. More specifically, the image checking unit 112 checks combined band data CB in the main scanning direction SD as illustrated in Fig. 7.

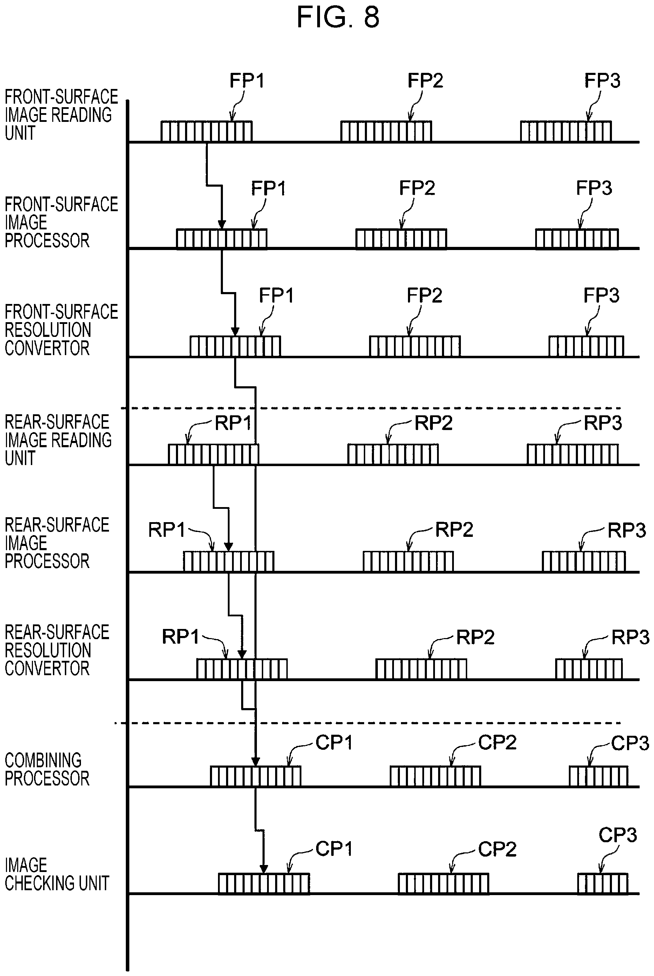

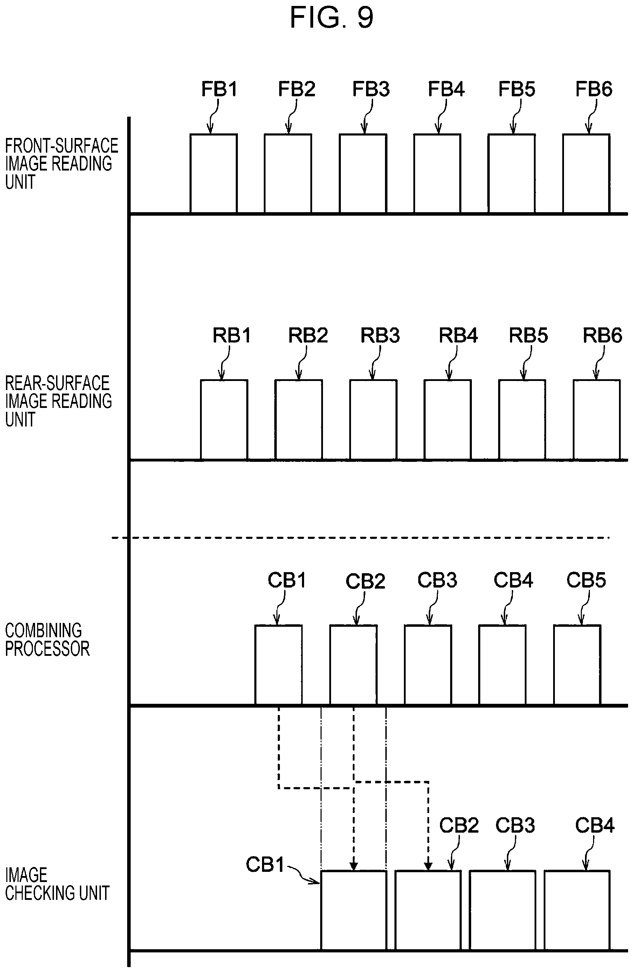

Figs. 8 and 9 are timing charts illustrating the temporal relationship from when, according to the data flow, the front-surface FS image and the rear-surface RS image of a recorded sheet are read, till the images are checked. Fig. 8 illustrates how to read multiple recorded sheets sequentially. Fig. 9 illustrates, in a temporally-enlarged view, processing, in Fig. 8, performed by the front-surface image reading unit 42, the rear-surface image reading unit 66, the combining processor 110, and the image checking unit 112.

Figs. 8 and 9 illustrate a time, during which each component processes data, as the length of a rectangle in the horizontal direction in the drawing. In other words, in Figs. 8 and 9, the length of a rectangle in the horizontal direction in a drawing represents a corresponding one of a time required for processing of front-surface band data FB, a time required for processing of rear-surface band data RB, and a time required for processing of combined band data CB.

As illustrated in Fig. 8, the front-surface image reading unit 42 reads image data of one page as front-surface page data FP. More specifically, front-surface page data FP for one page contains multiple pieces of front-surface band data FB as described above. As illustrated in Fig. 8, the front-surface image processor 102 and the front-surface resolution convertor 106 process pieces of front-surface page data FP sequentially as described above. As illustrated in Fig. 8, when there are multiple recorded sheets, they are read as multiple pieces of front-surface page data FP1, FP2, FP3, etc. A simple expression, "front-surface page data FP", refers to each one or any one of these pieces of front-surface page data FP without specifying which one.

Similarly, the rear-surface image reading unit 66 reads image data of one page as rear-surface page data RP. More specifically, rear-surface page data RP for one page contains multiple pieces of rear-surface band data RB as described above. As illustrated in Fig. 8, the rear-surface image processor 104 and the rear-surface resolution convertor 108 process pieces of rear-surface page data RP sequentially as described above. As illustrated in Fig. 8, when there are multiple recorded sheets, they are read as multiple pieces of rear-surface page data RP1, RP2, RP3, etc. A simple expression, "rear-surface page data RP", refers to each one or any one of these pieces of rear-surface page data RP without specifying which one.

The combining processor 110 combines front-surface page data FP with rear-surface page data RP as described above. Thus, as illustrated in Fig. 8, combined page data CP1, CP2, CP3, etc. are generated. A simple expression, "combined page data CP", refers to each one or any one of these pieces of combined page data CP without specifying which one.

In the present exemplary embodiment, as illustrated in Fig. 9, while the combining processor 110 is generating combined band data CB, the front-surface image reading unit 42 and the rear-surface image reading unit 66 generate next pieces of band data. For example, in Fig. 9, while the combining processor 110 is generating the combined band data CB1 on the basis of the front-surface band data FB1 and the rear-surface band data RB 1, the front-surface image reading unit 42 generates the front-surface band data FB2, and the rear-surface image reading unit 66 generates the rear-surface band data RB2. The image checking unit 112 checks the generated combined band data CB1. As illustrated in Figs. 8 and 9, in the image forming apparatus according to the present exemplary embodiment, these pieces of data are generated and checked sequentially. Thus, the front-surface FS image and the rear-surface RS image of a recorded sheet are checked as soon as they are ready.

That is, in the present exemplary embodiment, while the image checking unit 112 is checking combined band data CB, an operation of generating front-surface band data FB and rear-surface band data RB, which are used in combined band data CB that is to be checked after the checking combined band data CB, is started. In other words, in the present exemplary embodiment, while the front surface FS and the rear surface RS of a recorded sheet are being read, the image checking unit 112 starts checking combined band data CB.

While the image checking unit 112 is checking the combined band data CB1, the combining processor 110 generates the combined band data CB2 which is combined band data CB for next checking. More specifically, as illustrated in Fig. 9, after the image checking unit 112 starts checking combined band data CB, the combining processor 110 starts generating the combined band data CB2 which is combined band data CB for next checking.

Typically, the time required for checking by the image checking unit 112 is longer than the time required for the combining processor 110 to generate combined band data CB. Therefore, the combining processor 110 finishes generating the combined band data CB2 before completion of checking the combined band data CB 1. In other words, in the present exemplary embodiment, while the image checking unit 112 is checking combined band data CB, the combining processor 110 generates the next combined band data CB that is to be checked next after the combined band data CB that is being checked. That is, the combined band data CB2 is exemplary "next combined data" in the present exemplary embodiment.

In the present exemplary embodiment, as illustrated in Fig. 9, after completion of checking the combined band data CB1, the image checking unit 112 starts checking the combined band data CB2, and the combining processor 110 then starts generating the combined band data CB3 for after-next checking. In the present exemplary embodiment, as illustrated in Fig. 4, combined band data CB is transmitted from the combining processor 110 to the image checking unit 112 not through the RAM 92 (without storing in the RAM 92). In other words, in the present exemplary embodiment, combined band data CB is checked without being pooled in the RAM 92. That is, the combined band data CB3 is exemplary "after-next combined data" in the present exemplary embodiment.

### Operation of the Image Checking Unit 112

In the present exemplary embodiment, the image checking unit 112 checks combined band data CB in the main scanning direction SD sequentially. In other words, the image checking unit 112 checks the pieces of combined band data CB, which are illustrated in Fig. 7, sequentially from the end of the page. The image checking unit 112 checks combined band data CB from the end (the top side in Fig. 7) on the front-surface band data FB side to the end (the bottom side in Fig. 7) on the rear-surface band data RB side.

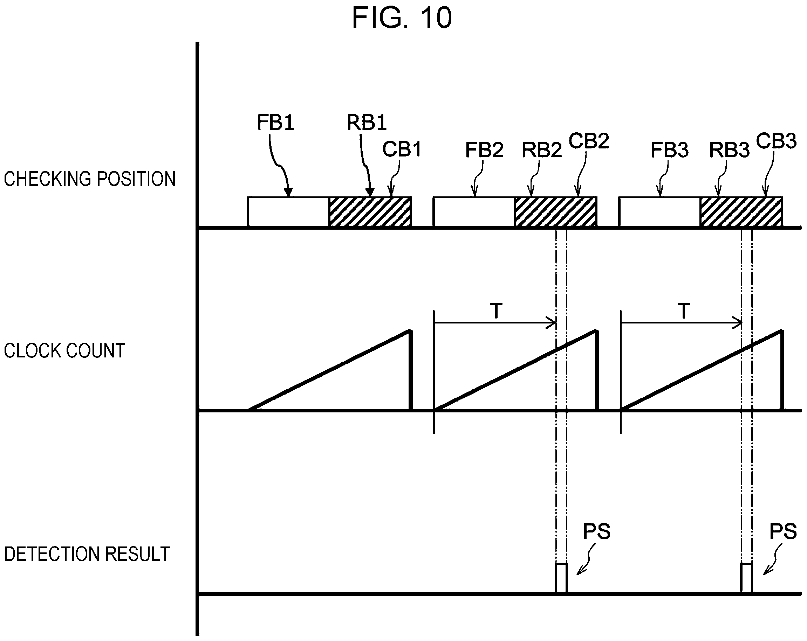

An elapsed time is measured by a clock counter (not illustrated) from when the image checking unit 112 starts checking one piece of combined band data CB till the image checking unit 112 ends the checking. As illustrated in Fig. 10, when the image checking unit 112 detects that a specific pattern SP is present while the clock counter is operating, the image checking unit 112 outputs a pulse signal PS indicating the detection. The CPU 91 obtains, from the clock counter, the clock counting value at the time of output of the pulse signal PS, that is, the elapsed time T from when the image checking unit 112 starts checking the combined band data CB.

As described above, the image checking unit 112 checks combined band data CB sequentially from the end in the main scanning direction SD. Therefore, the CPU 91 determines whether a specific pattern SP is included in the front-surface band data FB or the rear-surface band data RB in the combined band data CB, on the basis of the time, which is obtained from the clock counter, from start of the checking till output of the pulse signal. In other words, the CPU 91 specifies the position of the duplication-prohibited pattern RPP, which is included on the front surface FS or the rear surface RS of the recorded sheet, on the basis of the elapsed time T which is a time elapsing until the image checking unit 112 detects the specific pattern SP included in the combined band data CB.

### Operation of Prohibiting Duplication

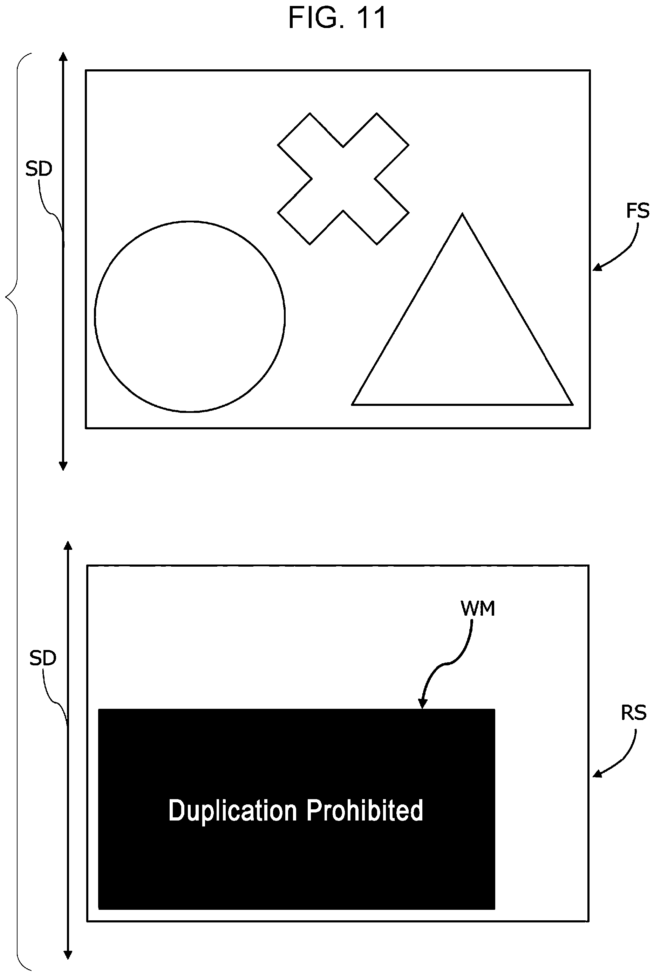

When it is detected that a duplication-prohibited pattern RPP is included in a recorded sheet as illustrated in Fig. 10, the CPU 91 may perform any processing. When a user performs an operation of duplicating a document containing a duplication-prohibited pattern RPP, as illustrated in Fig. 11, the image forming apparatus according to the present exemplary embodiment places a warning pattern WM, which indicates that duplication is prohibited, at the position of the duplication-prohibited pattern RPP. In other words, in the present exemplary embodiment, the CPU 91 rewrites, as data indicating the warning pattern WM, data, which corresponds to a duplication-prohibited pattern RPP, in the image data obtained through reading a document.

The image processing apparatus in the present disclosure corresponds to the following configuration in the present exemplary embodiment: a recorded sheet is read; and the read image data is edited, stored, and checked. More specifically, the controller 90, the front-surface image processor 102, the rear-surface image processor 104, the front-surface resolution convertor 106, the rear-surface resolution convertor 108, the combining processor 110, and the image checking unit 112 are an exemplary "image processing apparatus" in the present exemplary embodiment.

As illustrated in Fig. 3, the front-surface image processor 102, the rear-surface image processor 104, the front-surface resolution convertor 106, the rear-surface resolution convertor 108, the combining processor 110, and the image checking unit 112 may be configured by using any hardware. More specifically, an independent processor may perform the operations of these configurations. Alternatively, the CPU 91 may execute the program 96 to perform the operations. That is, the front-surface image processor 102, the rear-surface image processor 104, the front-surface resolution convertor 106, the rear-surface resolution convertor 108, the combining processor 110, and the image checking unit 112 are an exemplary "processor" in the present exemplary embodiment, and the CPU 91 is also an exemplary "processor" in the present exemplary embodiment.

Subsequently, operation and effect of the image forming apparatus in the present exemplary embodiment will be described.

### Operation and Effect

In the image processing apparatus according to this aspect, the combining processor 110 generates combined band data CB obtained by combining generated front-surface band data FB with generated rear-surface band data RB. The image checking unit 112 checks whether a specific pattern SP, which may be included in the generated combined band data CB, is present. The image checking unit 112 checks the combined band data CB. Thus, it is checked whether a specific pattern SP, which may be included in front-surface band data FB and rear-surface band data RB, is present. Therefore, according to the image processing apparatus in this aspect, compared with the case in which a specific pattern SP, which may be included on any of the surfaces of a recorded sheet, is checked for sequentially in pieces of front-surface band data FB and pieces of rear-surface band data RB, the amount of use of the RAM 92 for storage of pieces of front-surface band data FB or pieces of rear-surface band data RB, which are waiting for the checking, may be reduced.

While the image checking unit 112 is checking a piece of combined band data CB, the front-surface image reading unit 42 according to this aspect starts generating a piece of front-surface band data FB used in another piece of combined band data CB that is to be checked after the piece of combined band data CB. Similarly, while the image checking unit 112 is checking a piece of combined band data CB, the rear-surface image reading unit 66 starts generating a piece of rear-surface band data RB used in another piece of combined band data CB that is to be checked after the piece of combined band data CB. More specifically, while combined band data CB is being checked, the front-surface image reading unit 42 and the rear-surface image reading unit 66 generate front-surface band data FB and rear-surface band data RB. Therefore, compared with the case of waiting to check combined band data CB until completion of generating the pieces of front-surface band data FB of the entire recorded sheet, the time required to check, for the entire recorded sheet, whether a specific pattern SP is present is shortened. Compared with the case of waiting to check combined band data CB until completion of generating the pieces of rear-surface band data RB of the entire recorded sheet, the time required to check, for the entire recorded sheet, whether a specific pattern SP is present is shortened.

While the front-surface image reading unit 42 is reading the front surface FS of a recorded sheet, the image checking unit 112 according to this aspect starts checking combined band data CB. While the rear-surface image reading unit 66 is reading the rear surface RS of a recorded sheet, the image checking unit 112 according to this aspect starts checking combined band data CB. Therefore, according to the image processing apparatus in this aspect, compared with the case of waiting to check combined band data CB until completion of reading the entire recorded sheet, the time required to check, for the entire recorded sheet, whether a specific pattern SP is present is shortened.

While the image checking unit 112 is checking combined band data CB, the combining processor 110 according to this aspect generates next combined band data CB for next checking. Therefore, according to the image processing apparatus in this aspect, compared with the case of waiting to generate next combined band data CB until completion of checking current combined band data CB, the time for the combining processor 110 to wait for input data is decreased. Thus, according to the image processing apparatus in this aspect, the time required to check, for the entire recorded sheet, whether a specific pattern SP is present is shortened.

After completion of checking combined band data CB, the image checking unit 112 starts checking next combined band data CB, and the combining processor 110 then generates after-next combined band data CB for next checking. Therefore, according to the image processing apparatus in this aspect, compared with the case in which the combining processor 110 starts generating after-next combined band data CB before start of checking of next combined band data CB, the time for the image checking unit 112 to wait for input data is decreased. Thus, according to the image processing apparatus in this aspect, the time required to check, for the entire recorded sheet, whether a specific pattern SP is present is further shortened. In addition, since combined band data CB is not pooled in the RAM 92, the amount of use of the RAM 92 may be decreased.

When the image checking unit 112 detects that a specific pattern SP is included in combined band data CB, the CPU 91 determines the position of the specific pattern SP. More specifically, the CPU 91 determines whether the specific pattern SP is included in the front-surface band data FB or the rear-surface band data RB in the combined band data CB. Therefore, according to the image processing apparatus in this aspect, which surface of a recorded sheet contains a specific pattern SP may be detected.

When the image checking unit 112 detects a specific pattern SP, the CPU 91 specifies the position of the specific pattern SP on the basis of the elapsed time T in the checking of the combined band data CB. Therefore, according to the image processing apparatus in this aspect, compared with the case in which only which data, the front-surface band data FB or the rear-surface band data RB, contains a specific pattern SP is specified, a process corresponding to the specific pattern SP may be performed at the position of the specific pattern SP disposed on the recorded sheet.

The image processing apparatus according to this aspect generates combined band data CB on the basis of front-surface band data FB and rear-surface band data RB which have been demagnified. Therefore, according to the image processing apparatus in this aspect, compared with the case in which whether a specific pattern SP is present is checked by using combined band data CB generated without demagnifying front-surface band data FB and rear-surface band data RB, the time required to check whether a specific pattern SP is present is shortened.

In the description above, combined band data CB is transmitted to the image checking unit 112 without storing in the RAM 92. According to the image processing apparatus in this aspect, compared with the case in which whether a specific pattern SP is present is checked by using combined band data CB generated without a demagnifying process, the capacity of the RAM 92 which is required to store the combined band data CB is decreased. The same is true even if combined band data CB is stored in the RAM 92.

The program 96 according to this aspect causes the CPU 91 to generate combined band data CB obtained by combining front-surface band data FB with rear-surface band data, RB which have been generated. The program 96 causes the CPU 91 to check whether a specific pattern SP, which may be included in the generated combined band data CB, is present. The CPU 91 checks the combined band data CB, and whether a specific pattern SP, which may be included in the front-surface band data FB and the rear-surface band data RB, is present is thus checked. Therefore, according to the program 96 in this aspect, compared with the case in which a specific pattern SP, which may be included on any of the surfaces of a recorded sheet, is checked for sequentially in pieces of front-surface band data FB and pieces of rear-surface band data RB, the amount of use of the RAM 92 for storage of pieces of front-surface band data FB or pieces of rear-surface band data RB, which are waiting for the checking, may be reduced.

### Modified Examples

In the description above, while the image checking unit 112 is checking combined band data CB, the front-surface image reading unit 42 starts generating front-surface band data FB used in combined band data CB for subsequent checking. While the image checking unit 112 is checking combined band data CB, the rear-surface image reading unit 66 starts generating rear-surface band data RB used in combined band data CB for subsequent checking. The front-surface image reading unit 42 and the rear-surface image reading unit 66 according to the present exemplary embodiment are not limited to these. After completion of checking combined band data CB, operations of generating front-surface band data FB and rear-surface band data RB may be started. In this case, the CPU 91 confirms that the image checking unit 112 finishes checking combined band data CB, and then starts generating next front-surface band data FB and next rear-surface band data RB.

In the description above, while the image checking unit 112 is checking combined band data CB, the combining processor 110 generates next combined band data CB for next checking. The combining processor 110 in the present exemplary embodiment is not limited to this. An aspect of waiting to generate next combined band data CB until completion of checking combined band data CB may be employed.

In the description above, after the image checking unit 112 starts checking combined band data CB, the combining processor 110 starts generating combined band data CB for next checking. The image checking unit 112 in the present exemplary embodiment is not limited to this. An operation of generating combined band data CB for after-next checking may be started before the image checking unit 112 starts checking combined band data CB.

In the description above, when the image checking unit 112 detects that a specific pattern SP is included in combined band data CB, the CPU 91 specifies the position of the specific pattern SP. For example, in an aspect in which, when combined band data CB contains a specific pattern SP, the side (in Fig. 5, the rear surface RS), which includes the pattern, is prohibited from being copied, the CPU 91 does not necessarily specify the position of the specific pattern SP.

In the description above, when the image checking unit 112 detects that a specific pattern SP is included in combined band data CB, the CPU 91 determines which data, the front-surface band data FB or the rear-surface band data RB, contains the specific pattern SP. For example, in an aspect in which, when a specific pattern SP is included in combined band data CB, the recorded sheet needs to be prohibited from being copied, the CPU 91 does not necessarily determine which data, the front-surface band data FB or the rear-surface band data RB, contains the specific pattern SP.

In the description above, the combining processor 110 generates combined band data CB by using front-surface band data FB and rear-surface band data RB which have been demagnified. The operation of the image processing apparatus in the present exemplary embodiment is not limited to this. An aspect in which combined band data CB is generated without demagnification may be employed.

In the description above, combined band data CB is generated on the basis of front-surface band data FB and rear-surface band data RB. The number of pixels in the sub-scanning direction in front-surface band data FB and rear-surface band data RB is not particularly limited. For example, any value approximately from eight pixels to 64 pixels may be employed.

In the description above, the combining processor 110 generates combined band data CB by combining front-surface band data FB with rear-surface band data RB in the main scanning direction SD. In the present exemplary embodiment, if the image checking unit 112 is capable of checking combined band data CB at a time, an aspect of combination in combined band data CB is not limited to this. For example, combined band data CB may be generated so that front-surface band data FB is aligned with rear-surface band data RB in the sub-scanning direction.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the exemplary embodiments above, memory refers to memory in a broad sense, and encompasses, for example, a register, cache memory, and disk cache in addition to the RAM described above.

In the embodiments above, the term "processor" is broad enough to encompass one processor or plural processors in collaboration which are located physically apart from each other but may work cooperatively. Alternatively, multiple operations performed by specific processors in the embodiments may be performed by a single processor in such a manner that some or all the operations are integrated. The order of operations of the processor is not limited to one described in the embodiments above, and may be changed.

A program for operating the image forming apparatus may be provided through a computer-readable recording medium, such as a Universal Serial Bus (USB) memory, a flexible disk, or a compact disc read only memory (CD-ROM), or may be provided online over a network such as the Internet. In this case, a program, which is recorded in a computer-readable recording medium, is typically transferred, for example, to memory or storage to be stored. The program may be provided, for example, as a single piece of application software, or may be embedded in software in apparatuses as a function of the image forming apparatus.

Also in these embodiments and modified examples, substantially the same operation and effect as those described above may be obtained.

The exemplary embodiment in the present disclosure is described by referring to the attached drawings. It is clear that those who have typical knowledge in the technical field, to which the present disclosure belongs, may make various change examples or application examples in the scope of the technical idea described in the scope of claims. Needless to say, it is to be understood that the change examples or application examples belong to the technical scope of the present disclosure.

### Appendix

(((1))) An image processing apparatus comprising:
   a processor configured to:
   read a first surface of a recorded sheet to generate pieces of first data;
   read a second surface of the recorded sheet to generate pieces of second data;
   combine the generated pieces of first data with the respective generated pieces of second data; and
   check whether a specific pattern is present, the specific pattern being a pattern which is possibly included in the pieces of combined data.
(((2))) (The image processing apparatus according to (((1))),
   wherein the processor is configured to:
   for each piece of combined data, during checking of the piece of combined data, start generating a next piece of first data and a next piece of second data which are used in a next piece of combined data that is to be checked after the piece of combined data.
(((3))) The image processing apparatus according to (((1))),
   wherein the processor is configured to:
   during reading of the first surface and the second surface of the recorded sheet, start checking each piece of combined data.
(((4))) The image processing apparatus according to any one of (((1))) to (((3))),
   wherein the processor is configured to:
   for each piece of combined data, during checking of the piece of combined data, generate a next piece of combined data that is to be checked next after the piece of combined data.
(((5))) The image processing apparatus according to (((4))),
   wherein the processor is configured to:
   in response to completion of checking the piece of combined data, start checking the next piece of combined data, and then generate an after-next piece of combined data for after-next checking.
(((6))) The image processing apparatus according to any one of (((1))) to (((5))),
   wherein the processor is configured to:
   for each piece of combined data, when it is detected that the piece of combined data contains the specific pattern, determine which data, the corresponding piece of first data or the corresponding piece of second data, included in the piece of combined data contains the specific pattern.
(((7))) The image processing apparatus according to (((6))),
   wherein the processor is configured to:
   specify a position of the specific pattern on a basis of an elapsed time in the checking of the piece of combined data, the elapsed time being a time till when it is determined that the specific pattern is present.
(((8))) The image processing apparatus according to any one of any one of (((1))) to (((7))),
   wherein the processor is configured to:
   for each pair of first data and second data, demagnify the piece of first data and the piece of second data; and
   generate a corresponding piece of combined data on a basis of the demagnified piece of first data and the demagnified piece of second data.
(((9))) A program causing a computer to execute a process comprising:
   reading a first surface of a recorded sheet to generate pieces of first data;
   reading a second surface of the recorded sheet to generate pieces of second data;
   combining the generated pieces of first data with the respective generated pieces of second data; and
   checking whether a specific pattern is present, the specific pattern being a pattern which is possibly included in the pieces of combined data.

According to the image processing apparatus in the aspect of (((1))), compared with the case in which a specific pattern, which may be included on any of the surfaces of a recorded sheet, is checked for sequentially in the pieces of first data and the pieces of second data, the amount of memory use may be reduced.

According to the image processing apparatus of (((2))), compared with the case of waiting to check a piece of combined data until completion of, for the entire recorded sheet, generating the pieces of first data or generating the pieces of second data, the time required to check, for the entire recorded sheet, whether a specific pattern is present is shortened.

According to the image processing apparatus of (((3))), compared with the case of waiting to check the pieces of combined data until completion of reading the entire recorded sheet, the time required to check, for the entire recorded sheet, whether a specific pattern is present is shortened.

According to the image processing apparatus of (((4))), compared with the case of waiting to generate a next piece of combined data until completion of a piece of combined data, the time required to check, for the entire recorded sheet, whether a specific pattern is present is shortened.

According to the image processing apparatus of (((5))), compared with the case in which an operation of generating an after-next piece of combined data is started before start of checking of a next piece of combined data, the time required to check, for the entire recorded sheet, whether a specific pattern is present is further shortened.

According to the image processing apparatus of (((6))), it may be detected which surface of a recorded sheet contains a specific pattern.

According to the image processing apparatus of (((7))), compared with the case in which only which data, a piece of first data or a piece of second data, contains a specific pattern is specified, a process corresponding to the specific pattern may be performed at the position of the specific pattern disposed on a recorded sheet.

According to the image processing apparatus of (((8))), compared with the case in which it is detected whether a specific pattern is present by using a piece of combined data generated without demagnifying the corresponding piece of first data and the corresponding piece of second data, the time required to check whether a specific pattern is present is shortened.

According to the program of (((9))), compared with the case in which a specific pattern, which may be included on any of the surfaces of a recorded sheet, is checked for sequentially in the piece of first data and the pieces of second data, the amount of memory use may be reduced.

## Claims

1. An image processing apparatus comprising:
a processor configured to:
read a first surface of a recorded sheet to generate pieces of first data;
read a second surface of the recorded sheet to generate pieces of second data;
combine the generated pieces of first data with the respective generated pieces of second data; and
check whether a specific pattern is present, the specific pattern being a pattern which is possibly included in the pieces of combined data.

2. The image processing apparatus according to claim 1,
wherein the processor is configured to:
for each piece of combined data, during checking of the piece of combined data, start generating a next piece of first data and a next piece of second data which are used in a next piece of combined data that is to be checked after the piece of combined data.

3. The image processing apparatus according to claim 1,
wherein the processor is configured to:
during reading of the first surface and the second surface of the recorded sheet, start checking each piece of combined data.

4. The image processing apparatus according to any one of claims 1 to 3,
wherein the processor is configured to:
for each piece of combined data, during checking of the piece of combined data, generate a next piece of combined data that is to be checked next after the piece of combined data.

5. The image processing apparatus according to claim 4,
wherein the processor is configured to:
in response to completion of checking the piece of combined data, start checking the next piece of combined data, and then generate an after-next piece of combined data for after-next checking.

6. The image processing apparatus according to any one of claims 1 to 5,
wherein the processor is configured to:
for each piece of combined data, when it is detected that the piece of combined data contains the specific pattern, determine which data, the corresponding piece of first data or the corresponding piece of second data, included in the piece of combined data contains the specific pattern.

7. The image processing apparatus according to claim 6,
wherein the processor is configured to:
specify a position of the specific pattern on a basis of an elapsed time in the checking of the piece of combined data, the elapsed time being a time till when it is determined that the specific pattern is present.

8. The image processing apparatus according to any one of claims 1 to 7,
wherein the processor is configured to:
for each pair of first data and second data, demagnify the piece of first data and the piece of second data; and
generate a corresponding piece of combined data on a basis of the demagnified piece of first data and the demagnified piece of second data.

9. A program causing a computer to execute a process comprising:
reading a first surface of a recorded sheet to generate pieces of first data;
reading a second surface of the recorded sheet to generate pieces of second data;
combining the generated pieces of first data with the respective generated pieces of second data; and
checking whether a specific pattern is present, the specific pattern being a pattern which is possibly included in the pieces of combined data.

10. A method comprising:
reading a first surface of a recorded sheet to generate pieces of first data;
reading a second surface of the recorded sheet to generate pieces of second data;
combining the generated pieces of first data with the respective generated pieces of second data; and
checking whether a specific pattern is present, the specific pattern being a pattern which is possibly included in the pieces of combined data.

## Amended claims

### Amended claims in accordance with Rule 137(2) EPC.

1. An image processing apparatus (10) comprising:
a processor (91) configured to:
read a first surface (FS) of a recorded sheet to generate front-surface band data (FB);
read a second surface (RS) of the recorded sheet to generate rear-surface band data (RB);
**characterized in that** the processor (91) is further configured to:
combine the generated front-surface band data (FB) with the respective generated rear-surface band data (RB) by aligning the front-surface band data (FB) with the rear-surface band data (RB) to generate pieces of combined band data (CB) in a sub-scanning direction;
check whether a specific pattern (SP) is present, the specific pattern (SP) being a pattern which is possibly included in the pieces of combined data (CB);
for each piece of combined data (CB), when it is detected that the piece of combined data (CB) contains the specific pattern (SP), determine which data, the corresponding front-surface band data (FB) or the corresponding rear-surface band data (RB), included in the piece of combined data (CB) contains the specific pattern (SP); and
specify a position of the specific pattern (SP) on a basis of an elapsed time (T) in the checking of the piece of combined data (CB), the elapsed time (T) being a time till when it is determined that the specific pattern (SP) is present.

2. The image processing apparatus (10) according to claim 1,
wherein the processor (91) is configured to:
for each piece of combined data (CB1), during checking of the piece of combined data (CB1), start generating a next front-surface band data (FB2) and a next rear-surface band data (RB2) which are used in a next piece of combined data (CB2) that is to be checked after the piece of combined data (CB1).

3. The image processing apparatus (10) according to claim 1, wherein the processor is configured to:
during reading of the first surface (FS) and the second surface (RS) of the recorded sheet, start checking each piece of combined data (CB).

4. The image processing apparatus (10) according to any one of claims 1 to 3, wherein the processor is configured to:
for each piece of combined data (CB1), during checking of the piece of combined data (CB1), generate a next piece of combined data (CB2) that is to be checked next after the piece of combined data (CB1).

5. The image processing apparatus (10) according to claim 4,
wherein the processor is configured to:
in response to completion of checking the piece of combined data (CB1), start checking the next piece of combined data (CB2), and then generate an after-next piece of combined data (CB3) for after-next checking.

6. The image processing apparatus (10) according to any one of claims 1 to 5, wherein the processor (91) is configured to:
for each pair of front-surface band data (FB) and rear-surface band data (RB), demagnify the front-surface band data (FB) and the rear-surface band data (RB); and
generate a corresponding piece of combined data (CB) on a basis of the demagnified front-surface band data (FB) and the demagnified rear-surface band data (RB).

7. A program (96) causing a computer to execute a process comprising:
reading a first surface (FS) of a recorded sheet to generate front-surface band data (FB);
reading a second surface (RS) of the recorded sheet to generate rear-surface band data (RB);
**characterized in that** the executed process further comprises:
combining the generated front-surface band data (FB) with the respective generated rear-surface band data (RB) by aligning the front-surface band data (FB) with the rear-surface band data (RB) to generate pieces of combined band data (CB) in a sub-scanning direction;
checking whether a specific pattern (SP) is present, the specific pattern (SP) being a pattern which is possibly included in the pieces of combined data (CB);
for each piece of combined data (CB), when it is detected that the piece of combined data (CB) contains the specific pattern (SP), determining which data, the corresponding front-surface band data (FB) or the corresponding rear-surface band data (RB), included in the piece of combined data (CB) contains the specific pattern (SP); and
specifying a position of the specific pattern (SP) on a basis of an elapsed time (T) in the checking of the piece of combined data (CB), the elapsed time (T) being a time till when it is determined that the specific pattern (SP) is present.

8. A method comprising:
reading a first surface (FS) of a recorded sheet to generate front-surface band data (FB);
reading a second surface (RS) of the recorded sheet to generate rear-surface band data (RB);
**characterized in that** the method further comprises:
combining the generated front-surface band data (FB) with the respective generated rear-surface band data (RB) by aligning the front-surface band data (FB) with the rear-surface band data (RB) to generate pieces of combined band data (CB) in a sub-scanning direction;
checking whether a specific pattern (SP) is present, the specific pattern (SP) being a pattern which is possibly included in the pieces of combined data (CB);
for each piece of combined data (CB), when it is detected that the piece of combined data (CB) contains the specific pattern (SP), determining which data, the corresponding front-surface band data (FB) or the corresponding rear-surface band data (RB), included in the piece of combined data (CB) contains the specific pattern (SP); and
specifying a position of the specific pattern (SP) on a basis of an elapsed time (T) in the checking of the piece of combined data (CB), the elapsed time (T) being a time till when it is determined that the specific pattern (SP) is present.
